## Europäisches Patentamt
## European Patent Office
## Office européen des brevets

(19)

(11) Veröffentlichungsnummer: **0 002 513**
A1

(12)

# EUROPÄISCHE PATENTANMELDUNG

(21) Anmeldenummer: 78101632.4

(22) Anmeldetag: 09.12.78

(51) Int. Cl.²: **C 08 L 75/00**
C 08 K 3/24, C 08 K 3/00
C 08 G 18/30, C 04 B 25/06

(30) Priorität: 17.12.77 DE 2756399

(43) Veröffentlichungstag der Anmeldung:
27.06.79 Patentblatt 79/13

(84) Benannte Vertragsstaaten:
DE FR GB NL

(71) Anmelder: BASF Aktiengesellschaft
Carl-Bosch-Strasse 38
D-6700 Ludwigshafen(DE)

(72) Erfinder: Chakrabarti, Sarbananda
Brüsseler Ring 45
D-6700 Ludwigshafen(DE)

(72) Erfinder: Volkert, Otto, Dr.
Im Eiertal 10
D-6719 Weisenheim/berg(DE)

(72) Erfinder: Müller, Gerhard, Dr.
Benderstrasse 29
D-8000 München 60(DE)

(54) Verfahren zur Herstellung von Verbundkörpern.

(57) Gegenstand der Erfindung ist ein Verfahren zur Herstellung von Verbundkörpern durch Aushärten lassen einer Mischung aus körnigen Feststoffpartikeln und isocyanatgruppenhaltigen Bindemitteln in Gegenwart von wäßrigen Salzlösungen aus Metallsalzen der ersten und zweiten Hauptgruppe des Periodensystems sowie Ammoniumsalzen.

Croydon Printing Company Ltd.

EP 0 002 513 A1

BASF Aktiengesellschaft                    O.Z. 0050/032939

Verfahren zur Herstellung von Verbundkörpern

Die Erfindung betrifft ein Verfahren zur Herstellung von Verbundkörpern aus körnigen Feststoffpartikeln und isocyanatgruppenhaltigen Bindemitteln, wobei zur Aushärtung der Mischung wäßrige Salzlösungen verwendet werden.

Es ist bekannt, daß man harte Schaumstoffgebilde, die eine ausreichende Formbeständigkeit aufweisen, herstellen kann, wenn man diskrete Teilchen eines porösen Styrolpolymerisates und eine schaumfähige, unter Bildung von Polyurethanen reagierende Mischung aus Polyolen, Di- und/oder Polyisocyanaten und Hilfsmitteln in eine Form einbringt und aufschäumen läßt.

Es ist ferner bekannt, kombinierte, weichelastische Schaumstoffe aus schaumförmigen Olefinhomo- und -copolymerisaten und schaumfähigen Polyurethanmischungen so herzustellen, daß man die geschäumten weichelastischen Kunststoffpartikel in loser Schüttung oder in miteinander verschweißten Agglomeraten in eine Form einbringt, in die hierbei entstehenden kommunizierenden Hohlräume die schaumfähige Polyurethanmischung unter Druck einspritzt und die Reaktionsmischung aufschäumen läßt. Derartige Kombinationsschaumstoffe bestehen aus einem Polyurethanschaumstoffgerüst, in das die geschäum-

M/ro

ten Olefinpolymerisatpartikel in homogener Verteilung eingebettet werden.

Nach Angaben der US-Patentschrift 3 114 722 werden aus zerkleinerten, geschäumten Polymerteilchen, wie geschäumten Teilchen aus Polyurethanen, Butadien-Styrol-Latex, Polyvinylacetat, Polyvinylchlorid und isocyanatgruppenhaltigen Präpolymeren in Gegenwart von Wasser-Katalysator-Mischungen Polyurethanschaumstoffe hergestellt, die Polymerteilchen eingebettet enthalten. Geschäumte Polymerteilchen, die durch Zerreißen von Abfallpolymeren hergestellt werden, besitzen unregelmäßig geformte, meist zackige Oberflächen. Die Teilchen verzahnen deshalb leicht miteinander zu größeren Agglomeraten, die nur schwer mit dem isocyanatgruppenhaltigen Präpolymeren einheitlich mischbar sind. Die aufgeschäumten Formkörper enthalten die geschäumten Polymerteilchen deshalb in einer äußerst unregelmäßigen Verteilung, so daß die Gebrauchseigenschaften derartiger Produkte starken Schwankungen unterliegen.

Zum Stande der Technik gehören ferner zahlreiche Verfahren zum Verkleben der verschiedensten Substrate mit Polyurethanpräpolymeren als Bindemittel. Dabei können dem Präpolymeren bzw. der Bindemittel-Substratmischung noch zahlreiche Hilfsmittel, wie Reaktionsbeschleuniger, Stabilisatoren, Lösungsmittel, Pigmente u.a. zugesetzt werden. Derartige Mischungen verfestigen sich durch Zusatz von niedermolekularen Vernetzungsmitteln, wie Diaminen, Glykolen u.a. oder im Laufe der Zeit unter dem Einfluß von Luftfeuchtigkeit. Gegebenenfalls ist es vorteilhaft, die Substrat-Bindemittelmischung zusammenzupressen und unter Druck aushärten zu lassen. Nachteilig an diesen Verfahren ist, daß eine relativ große Menge an teueren isocyanatgruppenhaltigen Bindemitteln benötigt wird, um die geforderten mechanischen Eigenschaften des Verbundkörpers zu erhalten. Wird beispielsweise Sand mit einem

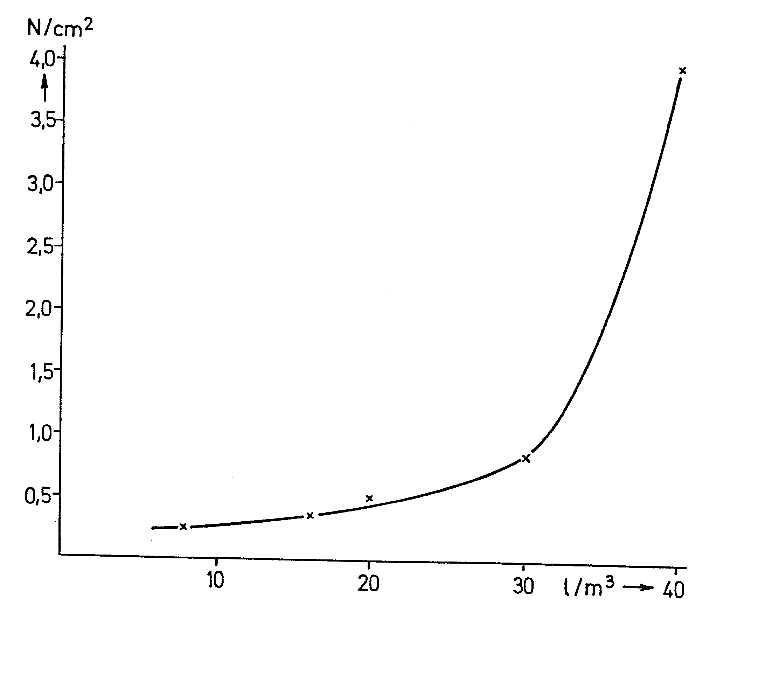

Polyisocyanat als Bindemittel verklebt, so steigt die erhaltene Druckfestigkeit des Verbundkörpers mit steigenden Gehalt an Polyisocyanat in der Mischung an. Um eine gewisse Mindestdruckfestigkeit zu erzielen, muß beispielsweise der Gehalt an isocyanatgruppenhaltigen Bindemitteln bis auf 40 $l/m^3$ Sand erhöht werden (Abb. 1). Die Verfestigung von körnigen Feststoffpartikeln, beispielsweise von Sand zum Unterbau von Straßenbelägen, Abstützen von Böschungen usw., die ein technisch wichtiges Problem darstellen, scheitert daher vielfach aus Kostengründen.

Aufgabe der vorliegenden Erfindung war es ein kostengünstigeres Verfahren zur Verfestigung von körnigen Feststoffpartikeln mit isocyanatgruppenhaltigen Bindemitteln zu entwickeln.

Überraschenderweise wurde gefunden, daß die Bindekraft von isocyanatgruppenhaltigen Bindemitteln bei der Verfestigung von körnigen Feststoffpartikeln stark ansteigt, wenn zur Aushärtung wäßriger Salzlösungen verwendet werden.

Gegenstand der vorliegenden Erfindung ist somit ein Verfahren zur Herstellung von Verbundkörpern aus körnigen Feststoffpartikeln, isocyanatgruppenhaltigen Bindemitteln und gegebenenfalls Zusatzstoffen, das dadurch gekennzeichnet ist, daß man die Ausgangsstoffe mischt und in Gegenwart von wäßrigen Salzlösungen aushärten läßt.

Mit Hilfe des erfindungsgemäßen Verfahrens wird die Bindekraft von isocyanatgruppenhaltigen Bindemitteln ausgedrückt durch die Druckfestigkeit der zu verfestigenden Feststoffpartikel, beträchtlich erhöht und erreicht beispielsweise bei der Verfestigung einer Sand-Polyisocyanatmischung unter Verwendung einer 6-gewichtsprozentigen, wäßrigen Kaliumchloridlösung anstelle von Wasser fast den 10-fachen Wert.

Durch die Erfindung kann daher die Menge an verwendbaren isocyanatgruppenhaltigen Bindemitteln stark reduziert werden, ohne daß die Druckfestigkeit der hergestellten Verbundkörper verringert wird.

Die Verbundkörper werden nach dem erfindungsgemäßen Verfahren aus körnigen Feststoffpartikeln, isocyanatgruppenhaltigen Bindemitteln, wäßrigen Salzlösungen und gegebenenfalls Zusatzstoffen hergestellt.

Als körnige Feststoffpartikel kommen organische und vorzugsweise anorganische Partikel in Betracht, die eine Korngröße von 0,01 bis 50 mm, vorzugsweise von 0,1 bis 2,0 mm besitzen.

Die Feststoffpartikel können beispielsweise bestehen aus organischen Materialien, wie Holzspänen, Gummiabfällen, Gummigranulaten und Kunststoffgranulaten auf Basis von organischen Polymeren, und anorganischen Materialien, z.B. keramischen Materialien wie Tonscherben und Glasscherben, Metallpartikeln, Sand, Kies und Schotter. Vorzugsweise verwendet werden jedoch Sand und Kies, insbesondere Sand der folgenden Siebfraktionen enthält:

ungefähr 33 % aus Teilchen der Korngröße 0,06 bis 0,5 mm
        34 % "    "         "    "      0,5  "  1,0 "
        33 % "    "         "    "      1,0  "  2,0 "

bzw.

ungefähr 80 % "    "         "    "      0,01 "  0,4 "
        20 % "    "         "    "      0,4  "  0,8 "

und Kies der folgenden Korngrößenverteilung aufweist:

| ungefähr | 7 % | aus | Teilchen | der | Größe | 0 | bis | 0,25 | mm |
|----------|-----|-----|----------|-----|-------|------|-----|------|-----|
| | 7 % | " | " | " | " | 0,25 | " | 0,5 | mm |
| | 7 % | " | " | " | " | 0,5 | " | 1 | mm |
| | 11 % | " | " | " | " | 1 | " | 2 | mm |
| | 18 % | " | " | " | " | 2 | " | 4 | mm |
| | 9 % | " | " | " | " | 4 | " | 8 | mm |
| | 26 % | " | " | " | " | 8 | " | 16 | mm |
| | 13 % | " | " | " | " | 16 | " | 32 | mm |
| | 2 % | " | " | " | " | über | " | 32 | mm |

Die körnigen Feststoffpartikel können auch in Form von Mischungen zur Anwendung kommen. Besonders bewährt haben sich Gemische aus Sand und Kies, insbesondere mit den obengenannten Korngrößenverteilungen.

Geeignete isocyanatgruppenhaltige Bindemittel sind organische, vorzugsweise aromatische Di- und/oder Polyisocyanate, modifizierte organische Di- und/oder Polyisocyanate und vorzugsweise isocyanatgruppenhaltige Präpolymere, hergestellt aus Polyolen und organischen Di- und/oder Polyisocyanaten. Im einzelnen seien beispielhaft genannt: aliphatische Diisocyanate, wie 1,6-Hexamethylen-diisocyanat und 1,12-Dodecandiisocyanat, cycloaliphatische Diisocyanate, wie Cyclohexan-1,3- und -1,4-diisocyanat sowie beliebige Gemische dieser Isomeren, 1-Isocyanato-3,3,5-trimethyl-5-isocyanatomethyl-cyclohexan (Isophoron-diisocyanat) 2,4- und 2,6-Hexahydrotoluylen-diisocyanat sowie entsprechende Isomerengemische und vorzugsweise aromatische Di- und Polyisocyanate, wie 4,4'-, 2,4'- und 2,2'-Diisocyanato-diphenylmethan oder die entsprechenden Isomerengemische, 2,4- und 2,6- Diisocyanato-toluol und die entsprechenden Isomerengemische, 1,5-Diisocyanato-naphthalin, Polyphenyl-polymethylen-polyisocyanate, 2,4,6-Triisocyanato-toluol und vor- zugsweise Gemische aus Di- und Polyphenyl-polymethylen-polyisocyanaten (Roh-MDI). Die genannten Di- und Polyisocyanate können einzeln oder in Form von Mischung eingesetzt werden. Als modifizierte organische Di- und Polyisocyanate kommen beispielsweise in Betracht: Carbodiimidgruppen aufweisende Polyisocyanate gemäß DE-PS 1 092 007, Allophanatgruppen aufweisende Polyisocyanate, wie sie z.B. in der britischen Patentschrift 994 890, den ausgelegten Unterlagen des belgischen Patents 761 626 und der NL-OS 71 02 524 beschrieben werden, Isocyanuratgruppen aufweisende Polyisocyanate wie sie z.B. in den DE-PS 1 022 789, 1 222 067 und 1 027 394 sowie den DE-OS 1 929 034 und 2 004 048 beschrieben werden, Urethangruppen aufweisende Polyisocyanate, wie sie z.B. in den ausgelegten Unterlagen des belgischen Patents 752 261 oder der US-PS 3 394 164 beschrieben werden, acylierte Harnstoffgruppen aufweisende Polyisocyanate z.B. gemäß DE-PS 1 230 778, Biuretgruppen aufweisende Polyisocyanate z.B. gemäß DE-PS 1 101 394 und GB-PS 889 050, durch Telomerisationsreaktionen hergestellte Polyisocyanate z.B. entsprechend den ausgelegten Unterlagen des belgischen Patents 723 640, Estergruppen aufweisende Polyisocyanate, wie sie z.B. in der GB-PS 965 474 und 1 072 956, der US-PS 3 567 765 und der DE-PS 1 231 688 genannt werden.

Vorzugsweise als Bindemittel verwendet werden jedoch isocyanatgruppenhaltige Präpolymere mit Isocyanatgehalten von 5 bis 33 Gewichtsprozent, vorzugsweise von 10 bis 25 Gewichtsprozent, bezogen auf das Gesamtgewicht, hergestellt aus den obengenannten organischen, vorzugsweise aromatischen Di- und/oder Polyisocyanaten und Polyolen. Als Polyole werden Polyesterole und vorzugsweise Polyätherole verwendet, die teilverzweigt, verzweigt kettig oder vorzugsweise linear sind. Beispielsweise kommen Polyätherole in Betracht, die durch Polyalkoxylierung von Wasser und/oder mehrwertigen, vorzugsweise zweiwertigen Alkoholen, z.B.

Trimethylolpropan, Glyzerin und vorzugsweise Propylenglykol, Dipropylenglykol und Äthylenglykol mit Äthylenoxid und/oder Propylenoxid hergestellt werden. Auch Mischungen aus verschiedenen Polyätherolen, beispielsweise solche hergestellt aus Alkoholmischungen durch Anlagerung von Äthylenoxid und/oder Propylenoxid können verwendet werden.

Geeignete Polyätherole besitzen Molekulargewichte von 134 bis 6500, vorzugsweise von 1000 bis 4000 und Hydroxyzahlen von 25 bis 850, vorzugsweise 28 bis 115.

Zur Herstellung der Präpolymeren werden die Polyole und Polyisocyanate nach bekannten Methoden, gegebenenfalls in Gegenwart von Katalysatoren, bei Reaktionstemperaturen von 40 bis 90°C, vorzugsweise von 60 bis 80°C in 30 Minuten bis 5 Stunden, vorzugsweise in 1 bis 2 Stunden, in solchen Mengenverhältnissen zur Reaktion gebracht, daß pro Äquivalent Hydroxylgruppe der Polyole 1,5 bis 15, vorzugsweise 2,5 bis 8 Äquivalente Isocyanatgruppen der Di- und/oder Polyisocyanate vorliegen. Auf diese Weise werden Präpolymere erhalten, die gegebenenfalls überschüssiges monomeres Polyisocyanat enthalten, die Viskositäten von 300 bis 10000 cP, vorzugsweise von 500 bis 3000 cP, aufweisen und NCO-Gehalte von 5 bis 33 Gewichtsprozent, vorzugsweise 10 bis 25 Gewichtsprozent, besitzen. Für manche Anwendungsgebiete kann es zur Erniedrigung der Viskosität und zur Verbesserung der Verarbeitbarkeit zweckmäßig sein, die isocyanatgruppenhaltigen Präpolymeren mit weiteren monomeren Di- und/oder Polyisocyanaten zu verdünnen. Dies kann insbesondere im Falle der Verwendung isocyanatgruppenarmer Präpolymerer vorteilhaft sein.

Wesentliches Merkmal der vorliegenden Erfindung ist, daß man die Mischung aus körnigen Feststoffpartikeln und isocyanatgruppenhaltigen Bindemitteln unter Zusatz von wäßrigen Salzlösungen aushärten läßt. Als wäßrige Salzlösungen kommen Lösungen von Salzen von Metallen der zweiten und vorzugsweise der ersten Hauptgruppe des Periodensystems sowie Ammoniumsalze in Wasser in Betracht. Die Salzlösungen enthalten übliche Anionen auf Basis anorganischer Säuren, vorzugsweise jedoch Sulfat-, Phosphat- und insbesondere Halogenidionen, wie z.B. Chloridionen. Die wäßrigen Salzlösungen enthalten die Salze in einer Konzentration von 0,1 Gewichtsprozent bis zur Sättigungsgrenze, vorzugsweise von 1 bis 10 Gewichtsprozent, bezogen auf das Gesamtgewicht. Als Metallsalze der ersten und zweiten Hauptgruppe des Periodensystems seien beispielhaft genannt Alkalimetallsalze, vorzugsweise Natrium- und Kaliumsalze und Erdalkalimetallsalze, wie Calciumsalze, Magnesiumsalze sowie Ammoniumsalze.

Vorzugsweise verwendet werden: Natriumchlorid, Kaliumchlorid und Natriumsulfat.

Zur besseren Verarbeitbarkeit und Stabilisierung der erfindungsgemäß hergestellten Verbundkörper werden der Reaktionsmischung gegebenenfalls Zusatzstoffe einverleibt. Als Zusatzstoffe seien beispielsweise genannt: oberflächenaktive Substanzen; Katalysatoren bzw. Katalysatorsysteme, Stabilisatoren, Hydrolyseschutzmittel, fungistatisch und bakteriostatisch wirksame Substanzen, flammhemmende Stoffe, Pigmente und Farbstoffe.

Als oberflächenaktive Substanzen kommen alle wasserlöslichen Stoffe in Betracht, die gemeinhin als Emulgiermittel, Netzmittel oder kolloidal lösliche Polymere bekannt sind, unabhängig davon, ob sie anionischer, kationischer oder nichtionischer Natur sind. Genannt seien beispielsweise Alkalisalze längerkettiger aliphatischer Carbon- und Sulfonsäuren, Polyalkylenoxid-, vorzugsweise Polyäthylenoxid-Addukte aliphatischer oder aromatischer Alkohole oder Amine, die Alkali- oder Erdalkalisalze der Monoschwefelsäureester solcher Polyalkylenoxidaddukte, Polyvinylalkohol, Polyacrylamid, Polyvinylpyrrolidon, lösliche Stärke, Eiweißstoffe wie Kasein oder Tierleim, Cellulosederivate, wie Methylcellulose u.a. Die oberflächenaktiven Substanzen werden üblicherweise in Mengen von ungefähr 0,05 bis 5 Gewichtsprozent, vorzugsweise von 0,1 bis 2 Gewichtsprozent, bezogen auf das Gewicht der Salzlösung, angewandt.

Als Zusatzstoffe genannt seien ferner beispielsweise Katalysatoren bzw. Katalysatorsysteme, die die Isocyanatpolyaddition, insbesondere die Addition von Wasser an die Di- und Polyisocyanate bzw. isocyanatgruppenhaltige Präpolymere beschleunigen, wie tertiäre Amine, beispielsweise Triäthylendiamin, Triäthylamin, N,N'-Tetraalkylaminoalkyläther oder Organozinnverbindungen, beispielsweise Dibutylzinndilaurat, Bleioctoat oder Mischungen aus tertiären Aminen und Organometallverbindungen, Stabilisatoren, wie p-Toluolsulfonsäureester und Hydrolyseschutzmittel.

Zur Herstellung der Verbundkörper werden die körnigen Feststoffpartikel mit den isocyanatgruppenhaltigen Bindemitteln, der Salzlösung und gegebenenfalls den Zusatzstoffen gemischt. Die hierzu benötigte Menge an isocyanatgruppenhaltigem Bindemittel hängt im konkreten Einzelfall in sehr komplexer Weise von der Granulometrie der Feststoffpartikel, den Reindichten der Einsatzmaterialien und dem bei der Verarbeitung der Mischung erzielten Verdichtungsgrad ab. Aus diesem Grunde kann eine globale zahlenmäßige Begrenzung des Bindemittelanteils von 1 bis 20 Gewichtsprozent, bezogen auf das Gewicht der körnigen Feststoffpartikel, nur eine verhältnismäßige grobe Angabe sein. Verbundkörper mit zu-

Triedenstellenden Druckfestigkeiten werden im allgemeinen erhalten, wenn man die körnigen Feststoffpartikel mit 0,5 bis 10 Gewichtsprozent, vorzugsweise mit 1 bis 5 Gewichtsprozent, bezogen auf das Gewicht der Feststoffpartikel, eines organischen Di- und/oder Polyisocyanats mit einem Molekulargewicht bis ungefähr 400, eines modifizierten organischen Di- und/oder Polyisocyanats oder eines isocyanatgruppenhaltigen Präpolymeren als Bindemittel behandelt. Anstelle der reinen isocyanathaltigen Bindemittel können auch Mischungen aus organischen Di- und Polyisocyanaten, den modifizierten Di- und Polyisocyanaten sowie den isocyanatgruppenhaltigen Präpolymeren in den entsprechenden Mengenverhältnissen verwendet werden. Die zugesetzte Menge an Salzlösung beträgt ungefähr 0,1 bis 50 Gewichtsprozent, vorzugsweise 1 bis 10 Gewichtsprozent, bezogen auf das Gesamtgewicht der Mischung aus körnigen Feststoffpartikeln und isocyanatgruppenhaltigem Bindemittel.

Im einzelnen können die Verbundkörper beispielsweise nach folgenden Verfahrensvarianten hergestellt werden: Die körnigen Feststoffpartikel werden mit der wäßrigen Salzlösung angefeuchtet, anschließend werden das isocyanatgruppenhaltige Bindemittel und gegebenenfalls die Zusatzstoffe zugegeben und von Hand oder vorzugsweise mit Hilfe eines Mischgerätes mit den anderen Ausgangskomponenten intensiv gemischt. Es ist jedoch auch möglich, das isocyanatgruppenhaltige Bindemittel, die wäßrige Salzlösung und gegebenenfalls die Zusatzstoffe gleichzeitig den körnigen Feststoffpartikeln unter intensivem Mischen einzuverleiben. Um Verbundkörper mit möglichst großer mechanischer Festigkeit zu erhalten, hat es sich als vorteilhaft erwiesen, zunächst die körnigen Feststoffpartikel mit dem isocyanatgruppenhaltigen Bindemittel durch Vermischen oberflächlich zu ummanteln und erst danach die wäßrige Salzlösung und gegebenenfalls die Zusatzstoffe zuzumischen. Die Zusatzstoffe können mit der wäßrigen Salzlösung oder vorzugsweise gemeinsam mit dem isocyanatgruppenhaltigen Bindemittel der Reaktionsmischung einverleibt werden. Die Ausgangskomponenten werden üblicherweise bei Temperaturen von 15 bis $40^{\circ}$C vorzugsweise von 20 bis $30^{\circ}$C gemischt.

Zur Herstellung der Verbundkörper läßt man die Reaktionsmischung aus körnigen Feststoffpartikeln, isocyanatgruppenhaltigen Bindemitteln, wäßriger Salzlösung und gegebenenfalls Zusatzstoffen auf einer temporären oder bleibenden Unterlage oder in einer Form aushärten. Als Formen werden die an sich üblichen verwendet. Als bleibende Unterlagen kommen beispielsweise Metall-, Holz-, Asphalt- und Betonplatten oder Kunststoffolien in Betracht. Es ist jedoch auch möglich, größere Flächen, beispielsweise Unterlagen aus Asphalt, Estrich, Beton, Holz u.a. an Ort und Stelle mit den genanten Reaktionsmischungen zu beschichten. Die Verbundkörper besitzen je nach der Dichte der Feststoffpartikel Rohwichten von 1,4 bis 1,8 und Druckfestigkeiten von 0,3 bis 12 N/cm$^2$ und eignen sich beispielsweise als Baustoffe, Zwischenschichten für Verbundelemente, zum Unterbau von Straßen, und zum Verfestigen von Böschungen und lockeren Sandböden usw.

Die in den Beispielen genannten Teile beziehen sich auf das Gewicht.

<u>Beispiel 1</u>

a)    Herstellung des isocyanatgruppenhaltigen Bindemittels (Präpolymer A)

In einem Dreihalskolben, ausgestattet mit Tropftrichter, Rührer und Rückflußkühler, läßt man zu einer Mischung aus 168 Teilen eines handelsüblichen Toluylendiisocyanatgemisches (2,4-:2,6-TDI 80/20) und 168 Teilen eines Gemisches aus Di- und Polyphenyl-polymethylen-polyisocyanaten (Roh-MDI) bei 80°C innerhalb von 30 Minuten 654 Teile eines Polyätherols auf Basis Polypropylenoxid mit 18 Gewichtsprozent, bezogen auf das Gesamtgewicht, endständigen Äthylenoxidgruppen (OH-Zahl 28), der mit 0,1 Teilen Benzoylchlorid versetzt wurde, zu tropfen, so daß die Temperatur von 80°C beibehalten wird. Anschließend wird noch 2 Stunden bei 80°C zur Vervollständigung der Reaktion gerührt. Das erhaltene Präpolymere besitzt einen Gehalt an freien NCO-Gruppen von 9,5 Gewichtsprozent, bezogen auf das Gesamtgewicht und eine Viskosität von 1700 cPs bei 25°C.

b)     Herstellung des Verbundkörpers

10 000 ml Quarzsand, der zu 80 % aus Teilchen der Korngröße 0,1 bis 0,4 mm und zu 20 % aus Teilchen der Korngröße 0,4 bis 0,8 mm bestand, werden mit 600 ml einer 6-gewichtsprozentigen wäßrigen Kochsalzlösung angefeuchtet. Anschließend werden 165 g des oben beschriebenen Präpolymeren A als Bindemittel hinzugefügt und das ganze 5 Minuten intensiv gemischt. Die Mischung wurde in Metallformen mit der Dimension 7 x 7 x 7 cm gegeben und nach 4- bis 5-tägiger Lagerung bei Raumtemperatur entformt.

Die Druckfestigkeit der erhaltenen Verbundkörper betrug 2,6 N/cm$^2$ (gemessen nach DIN 53 423).

Verwendet man anstelle einer 6-gewichtsprozentigen eine gesättigte Kochsalzlösung (ca. 25-gewichtsprozentig) so steigt die Druckfestigkeit auf 12 N/cm$^2$ an.

Beispiele 2 bis 6 (Vergleichsbeispiel)

Man verführt analog den Angaben des Beispiels 1b, verwendet jedoch verschiedenartige Salzlösungen.

Die Art und Konzentration der verschiedenen verwendeten Salzlösungen sowie die Druckfestigkeit der erhaltenen Probekörper sind in der folgenden Tabelle zusammengefaßt.

Tabelle

| Beispiel | Salzlösung Art | Konzentration Gew.-% | Druckfestigkeit d. Verbundkörpers $N/cm^2$ |
|---|---|---|---|
| 2 | Kaliumchlorid | 6 | 3,5 |
| 3 | Natriumsulfat | 6 | 2,0 |
| 4 | Ammoniumphosphat | 6 | 0,8 |
| 5 | Kalium-Aluminiumsulfat | 6 | 0,6 |
| 6 (Vergl.-Beispiel) | Wasser | - | 0,3 |

Beispiele 7 bis 10

Man verfährt analog den Angaben des Beispiels 1b, verwendet jedoch anstelle des Präpolymer A eine Mischung aus Di- und Polyphenyl-polymethylen-polyisocyanaten (Roh-MDI) sowie die folgenden Präpolymeren:

Präpolymer B: Hergestellt durch Umsetzung von 89 g 4,4'-Diphenylmethan-diisocyanat und 11 g Dipropylenglykol.

Präpolymer C: Modifiziertes Toluylendisocyanat, hergestellt durch partielle katalytische Trimerisierung einer Mischung aus 2,4- und 2,6-Toluylendiisocyanat im Gewichtsverhältnis 80:20. Die Trimerisierung wird hierbei durchgeführt bis der NCO-Gehalt des Reaktionsgemisches 40 bis 41 % beträgt.

Präpolymer D: Umsetzungsprodukt aus 26 Teilen eines Gemisches aus 2,4- und 2,6-Toluylendiisocyanat im Gewichtsverhältnis 80:20 und 74 Teilen eines difunktionellen Polypropylenglykols der OH-Zahl 56. Das Präpolymer D besitzt einen NCO-Gehalt von 10,4 Gewichtsprozent.

Die Druckfestigkeiten der hergestellten Verbundkörper sind in der folgenden Tabelle zusammengefaßt:

| Bei-spiel | Salzlösung | Polyiso-cyanat | | Druckfestig-keit d. Ver-bundkörpers $N/cm^2$ |
|-----------|------------|----------------|---|-----------------------------------------------|
| 7 | 6 % Natriumchlorid | Roh-MDI | | 5,6 |
| 8 | " | Präpolymer B | | 6,4 |
| 9 | " | " | C | 3,0 |
| 10 | " | " | C | 7,4 |

Patentansprüche

1. Verfahren zur Herstellung von Verbundkörpern aus körnigen Feststoffpartikeln, isocyanatgruppenhaltigen Bindemitteln und gegebenenfalls Zusatzstoffen, dadurch gekennzeichnet, daß man die Ausgangsstoffe mischt und in Gegenwart von wäßrigen Salzlösungen aushärten läßt.

2. Verfahren zur Herstellung von Verbundkörpern gemäß Anspruch 1, dadurch gekennzeichnet, daß man die körnigen Feststoffpartikel mit dem isocyanatgruppenhaltigen Bindemittel ummantelt, danach die wäßrige Salzlösung hinzufügt und die Reaktionsmischung aushärten läßt.

3. Verfahren gemäß Anspruch 1, dadurch gekennzeichnet, daß man als körnige Feststoffpartikel Sand und/oder Kies verwendet.

4. Verfahren gemäß Anspruch 1, dadurch gekennzeichnet, daß die körnigen Feststoffpartikel eine Teilchengröße von 0,01 bis 50 mm aufweisen.

5. Verfahren gemäß Anspruch 1, dadurch gekennzeichnet, daß man als isocyanatgruppenhaltige Bindemittel organische Polyisocyanate und/oder isocyanatgruppenhaltige Präpolymere mit einem Gehalt an Isocyanatgruppen von 5 bis 33 Gewichtsprozent, bezogen auf das Gesamtgewicht, verwendet.

6. Verfahren gemäß Anspruch 1, dadurch gekennzeichnet, daß man als wäßrige Salzlösungen, Lösungen von Salzen von Metallen der ersten und zweiten Hauptgruppe des Periodensystems sowie Ammoniumsalze in Wasser verwendet.

7. Verfahren gemäß Anspruch 6, dadurch gekennzeichnet, daß die wäßrigen Salzlösungen als Anionen der Salze Halogenid-, Sulfat- und/oder Phosphationen enthalten.

8. Verfahren gemäß Anspruch 6, dadurch gekennzeichnet, daß die wäßrigen Salzlösungen Salze in einer Konzentration von 0,1 Gewichtsprozent bis zur Sättigung enthalten, wobei die Gewichtsprozente bezogen sind auf das Gesamtgewicht der Salzlösung.

9. Verfahren gemäß Anspruch 1, dadurch gekennzeichnet, daß das Gewichtsverhältnis von körnigen Feststoffpartikeln zu isocyanatgruppenhaltigen Bindemitteln von 100:1 bis 100:20 beträgt.

10. Verfahren gemäß Anspruch 1, dadurch gekennzeichnet, daß die zugesetzte Menge an Salzlösung 0,1 bis 50 Gewichtsprozent, bezogen auf das Gesamtgewicht von körnigen Feststoffpartikeln und isocyanatgruppenhaltigem Bindemittel, beträgt.

Zeichn.

## EINSCHLÄGIGE DOKUMENTE

| Kategorie | Kennzeichnung des Dokuments mit Angabe, soweit erforderlich, der maßgeblichen Teile | betrifft Anspruch |
|---|---|---|
| | US - A - 3 505 275 (HISAYUKI SATO et al.)<br><br>* Spalten 6,7; Anspruch 1; Spalte 1, Zeilen 16-26; Spalte 3, Zeilen 6-9,48-59; Spalte 4, Zeilen 37-62 * | 1-10 |
| | FR - A - 2 273 830 (BASF)<br><br>* Seite 11, Ansprüche 1,4,5; Seite 4, Zeile 35 bis Seite 5, Zeile 5 * | 1-10 |
| | FR - A - 2 008 417 (ICI)<br><br>* Seite 8, Ansprüche 1-3; Seite 2, Zeilen 4-6,12-20 * | 1-10 |
| | FR - A - 2 322 184 (ICI)<br><br>* Seite 16, Anspruch 1; Seite 17, Anspruch 9; Seite 1, Zeilen 20-23; Seite 8, Zeile 19 bis Seite 9, Zeile 31; Seite 12, Zeilen 29-37 * | 1-10 |

**KLASSIFIKATION DER ANMELDUNG (Int.Cl.²)**

C 08 L 75/00
C 08 K 3/24
3/00
C 08 G 18/30
C 04 B 25/06

**RECHERCHIERTE SACHGEBIETE (Int. Cl.²)**

C 08 L 75/00
75/02
75/04
75/06
75/08
C 08 G 18/22
18/30
18/10
18/12
C 08 K 3/24
3/00
C 04 B 25/06
B 22 C 1/22

**KATEGORIE DER GENANNTEN DOKUMENTE**

X: von besonderer Bedeutung
A: technologischer Hintergrund
O: nichtschriftliche Offenbarung
P: Zwischenliteratur
T: der Erfindung zugrunde liegende Theorien oder Grundsätze
E: kollidierende Anmeldung
D: in der Anmeldung angeführtes Dokument
L: aus andern Gründen angeführtes Dokument
&: Mitglied der gleichen Patentfamilie, übereinstimmendes Dokument

Der vorliegende Recherchenbericht wurde für alle Patentansprüche erstellt.

| Recherchenort | Abschlußdatum der Recherche | Prüfer |
|---|---|---|
| Den Haag | 23-03-1979 | VAN PUYMBROECK |

EPA form 1503.1 06.78